# EUROPEAN PATENT APPLICATION

(11) **EP 0 896 992 A1**
(43) Date of publication of application: **17.02.1999**
(21) Application number: 97202467.3
(22) Date of filing: 11.08.1997
(51) Int. Cl.: C09J 5/02, B32B 31/00

(54) **Process for adhering two polymer materials using a plasma treatment**

(71) Applicant: DSM N.V., 6411 TE Heerlen (NL)
(72) Inventor: Dijkstra, Krijn, 6137 JB Sittard (NL); Magalhaes, Arminda Maria Leite, 6211 BG Maastricht (NL); Avides Moreira, Antônio, 4150 Porto (PT)

(57) **Abstract**

The invention relates to a process for obtaining an improved adhesion between two polymer materials, each comprising at least one polymer, optionally the polymer material containing up to 80% by weight of one or more additives, in which process the surface of at least one polymer material is subjected to a plasma treatment using an electrical discharge, characterized in that a) the two materials are subjected to the plasma treatment, b) during the plasma treatment the two materials are in contact with each other and c) an electrical field is passed through the two materials.

A 10-fold increase of the adhesion between the two polymer materials is realized by a plasma treatment in air at atmospheric pressure.

Also, the invention relates to a multilayered object comprising at least two polymer materials with an improved adhesion. The polymer is chosen from the group consisting of polyolefines, polyesters, polyetheresters, polyamides, polyetheramides, polyetherurethanes, acrylonitrile-butadiene-styrene copolymers, cellophanes, polystyrenes, polyvinylchlorides, vinylidene chloride polymers, ethylene vinyl acetate copolymers, polyurethanes, polytetrafluorethylene and blends thereof.

## Description

The present invention relates to a process for obtaining an improved adhesion between two polymer materials, each comprising at least one polymer, optionally the polymer material containing up to 80% by weight of one or more additives, in which process a surface of the polymer material is subjected to a plasma treatment using an electrical discharge.

Such process is know from the Encyclopedia of Polymer Science and Engineering, Supplement Volume, in the chapter on Surface Modification, p. 674 and following, (1989) and the references mentioned therein. The most simple plasma treatment is the corona discharge treatment in air at atmospheric pressure. The corona discharge technique is described in more detail in for instance T.appl. 65(8), 75-78 (1982) and Kunststoffberater 10, 31 (1987) and is in essence a high-frequency electric discharge between two electrodes by which negative charges, i.e. electrons and ions, are transported with very high velocity, due to the imposed high-field strength, to the positive electrode, which in general supports the polymer material of which the surface is to be treated. By treating the polymer surface, it becomes chemically modified. After the treatment of the polymer surface, the treated polymer surface is contacted with a second polymer surface, optionally followed by hot or cold sealing of the resulting multilayered object. The plasma treatment is often applied for polymer materials that cannot be joined directly, i.e. without any intermediate layer acting as a glue to keep the polymer materials together, or show a low adhesion when joined directly using a heat treatment, for instance sealing, such that at least one of the contacting surfaces is to be chemically modified to make adhesion possible or improve the adhesion considerably. Polymer materials that cannot be joined directly or show a low adhesion are for instance materials of different chemical composition. The surface treatment or the improvement of the adhesion may also be accomplished by chemical means, for instance by applying a compatibilizing compound or using a sealant. The known processes, more particularly the process comprising a plasma treatment, are frequently employed for the adhesion of polymer films, sheets or foils to, for example polymer films, sheets, foils or other substrates of different thickness, for example woven and non-woven materials.

The adhesion of two polymer surfaces is generally improved appreciably by a plasma pretreatment of one of the surfaces before joining the two surfaces. However, the inventors found that in the case of a polyolefine substrate and a polyether block copolymer film, no improvement of the adhesion could be obtained by the conventional corona treatment of the polyolefine surface before contacting it with the surface of a polyether block copolymer material. Contrary to what was expected, even a decrease of the adhesion was observed. Also, the process in which at least one of the surfaces is plasma-treated and subsequently contacted with a second surface, is quite complicated as it comprises at least subsequently steps for plasma treatment of the polymer material, joining two polymer materials together and sealing the resulting multilayered object ; also the adhesion obtained by said process is sensible to variations in time between the plasma treatment step, the joining step and the sealing step. Furthermore, said process is prone to surface contamination, thereby worsening the adhesion.

The object of the present invention is to provide a process for joining two polymer materials, that is less complicated, involves less steps, is more reproducible, is less prone to contamination of the surface and yields multilayer objects with improved adhesion.

Very surprisingly, the inventors have found that the drawbacks of the know process can be overcome if :
a) the two polymer materials are subjected to plasma treatment,
b) during the plasma treatment the two materials are in contact with each other and
c) the electrical field is passed through the two materials.

By contact is meant the close physical contact between the surfaces of the two materials, however not excluding the situation where the contact area comprises a gap of microscopical dimensions, for instance 50 micrometer, nor the situation where the contact area comprises microscopical voids.

The process is especially useful for joining two materials that have a different composition or cannot or only partly be joined using a heat treatment.

Preferably, one of the polymer materials is a film or a sheet. By film is meant a flat section of material that is extremely thin in comparison to its other dimensions and has a nominal maximum thickness of 250 micrometer. By sheet is meant a flat section of material, equivalent to a film but with a thickness greater than 250 micrometer. Preferably, the sheet has a thickness smaller than 500 micron.

Preferably, the film or sheet is situated furthest away from the positive electrode, so that the electric discharge passes first through the film before reaching the surface of the adjoining polymer material.

Another preferred condition is that both materials are contacted under pressure before or during the plasma treatment. As the plasma treatment is preferably performed as a continuous process, this pressure is very practically exerted by at least one cylinder roll. The amount of pressure is not critical and may vary from case to case. The amount of pressure may easily be determined by a skilled person in practice.

The energy of the electrical field that is applied may vary over a wide range and depends inter alia on the thickness of the materials, frequency of the discharges, and duration of the treatment. The average skilled person can easily determine the optimum conditions from case to case.

The treatment is preferably limited to such a time and energy density that no pinholes are made in the film.

The treatment is carried out under enhanced, normal or reduced pressure and in the presence of a gas. The gas may be a single gas or a mixture, the constituent gasses chosen from inert gasses, for example He, Ar or Ne, oxidizing gasses, for example O₂, O₃, N₂, N0₂ and air, or reducing gasses, for example H₂. Preferably, air or a gas mixture containing about 20 % O₂ is used. Most preferably, air at normal pressure is used.

An advantage of the process according to the invention is that the mechanical properties of the polymer materials remain intact during the plasma treatment. This allows the manufacture of a multilayered object possessing at least the properties of the individual constituent materials.

The process according to the invention can easily be adopted to obtain a multilayered object of more than two layers of materials. For example, a number of films, sheets or other substrates can be contacted with each other by subjecting it to the process according to the invention.

Although the process according to the invention has the advantage that the materials constituting the multilayered object do not need to be pretreated, for instance by a corona treatment, the process can easily be applied to such pretreated materials also.

The present invention also relates to a multilayered object consisting of at least two layers of polymer material, the layers directly contacted with each other. Such multilayered objects are known from Owens, J. Applied Polymer Science, Vol 19, pp. 265-271 (1975), in which is described a multilayered object consisting of two polyolefine (PE) films.

Objects in which at least one of the materials is a film or sheet find use for example as packaging material for food packaging, as sheetings used as barrier film for water vapor or oxygen or as sheetings having the property of being waterrepellant but of being permeable for water vapor. Such sheetings find application in a wide range of fields, for instances surgical and other protective garment, as surface modifiers for laminating to substrates such as polyolefine panels used in making appliances, automobiles, etc., in diapers, sports and rain garment and in the building industry, for instance as roofing material. In these latter applications optimal use of the water vapor permeability can be made if the films, constituting the sheetings are very thin. However, in that case mechanical strength of the single film is too low and use has to be made of an adjoining material that supports the film. Supporting materials are for instance woven and non woven fibrous materials. For instance, in sports wear and rain coats the water repellant and water vapor permeable film is supported by a textile. The material of the textile, for instance polyester, is in most cases good compatible with the material of the film, for instance copolyetherester, and a strong permanent adhesion between the film and supporting material can be obtained by, for instance, a sealing process. One drawback of these sheetings is the insufficient adhesion of the materials that comprise these sheetings.

The object of the present invention is to make available a multilayered object comprising at least two polymer materials with an improved adhesion.

The inventors have found that such an object with an exceptional high adhesion between the surface of a polymer material and the surface of a second polymer material is obtained such that the multilayered object is obtained with an improved adhesion. In case the two materials have a different composition, the adhesion of the two polymer materials characterized by a maximum peel energy, measured according to ISO 8510-2, of at least 20 J/m₂ and an average peel energy of at least 10 J/m₂. More preferably, the maximum peel energy is at least 30 J/m₂ and the average peel energy is at least 15 J/m₂.

In case the two polymer materials have the same composition, the adhesion of the two polymer materials is characterized by a maximum peel energy, measured according to ISO 8510-2, of at least 80 J/m₂.

The polymer materials according to the invention may contain either apolar or polar groups.

The polymer materials my be chosen according to the purpose of the multilayered object to be produced. Preferably, the polymer material is chosen from the group of polyolefines, for example polyethylene and polypropylene, polyesters, for example polybutadiene terephtalate, polyetheresters, for example a polyetherester blockcopolymer comprising polybutyleenterephtalate and polytetrahydrofurane, polyamides, for example PA-6, PA-66 and PA-46, polyetheramides, polyetherurethanes, acrylonitrile-butadiene-styrene copolymers, cellophanes, polystyrenes, polyvinylchlorides, vinylidene chloride polymers, ethylene vinyl acetate copolymers, polyurethanes, polytetrafluorethylene and blends thereof. The polymer material may have the shape of a sheeting, for example made by sheet extrusion, but may also be a substrate, for example a woven or non-woven material.

The polymer material according to the invention may contain, if necessary, additives and fillers, for instance colorants, stabilizers, processing aids, flame retardant agents, talc, minerals and/or fibrous reinforcing materials. The proportion of these additives should be chosen so that the polymer forms a continuous phase and the interface between the film and matrix is mainly a polymer-polymer contact. However, in most applications the polymer material will contain only low amounts of additives.

The invention is now illustrated by some examples and comparative experiments. However, the invention is not limited thereto.

### Experimental

### Materials

Films of Arnitel EM400®, a polyetherester blockcopolymer, Shore D hardness of 40 and consisting essentially of polybutyleenterephtalate as hard segments and polytetrahydrofurane as soft segments, supplied by DSM (DSM N.V., The Netherlands), were made by sheet extrusion with a thickness of 12 µm, 25 µm, 50 µm and 100 µm.

Films of polybutadiene tereftalate (PBT) and polyamide-6 (PA-6) were made by sheet extrusion with a thickness of 30 µm.

Films of polyethylene (PE) and polypropylene (PP)(standard homopolymer film grade) were made by sheet extrusion with a thickness of 50 µm (PE) and 25 µm (PP).

Before the corona treatment all films were dried for 2 hours at 80°C.

### Corona treatment

The corona treatment was performed with a Softal generator type 3030 (maximum output voltage: 13 kV, output frequency: 16-30 kHz) in a standard configuration. The thickness of the film and the speed of the treated film or multilayered object were systematically varied. The input voltage (220 V) remained constant during the experiments on the maximal setting of the corona device.

The corona treatment was performed in two different ways. In a first method, according to the state of the art, a PP film was corona treated and subsequently cured on an Arnitel film under different conditions. As a reference also untreated PP film was cured on an Arnitel film under similar conditions.

By the process according to the invention, a multilayered object, consisting of two films was corona treated in such a way that the corona was on film with the highest thickness. With this multilayered object no subsequent sealing was performed after the corona treatment. Before the treatment the two films were pressed together by the weight of a cylinder roll.

### Sealing experiments (for PP/Arnitel only)

Sealing of the PP/Arnitel objects was done on a HSG/ETK hot seal apparatus, supplied by Otto Brugger. The temperature of the two sealing plates was set at 200 °C for the Arnitel side and 100 °C at the PP side. The sealing pressure was kept constant at 0.8 MPa. The sealing time was varied between 10 and 99s. Also the time-gap between the corona treatment and the sealing experiments was varied.

### Adhesion measurements

The test chosen to determine the strength of adhesion between the two polymer materials was the 180°C Peel Test according to ISO 8510-2. The test was performed in a tensile machine ZWICK 1445 with a speed of 25 mm/min and a load cell of 5N. The values of the peel test recorded are averaged over three samples. The dimensions of the sheetings were : 100 x 20 mm (length x width) and 125, 75, 50, 37 µm of thickness.

### Results

In the Table 1 the strength of adhesion of multilayered objects of PP/Arnitel is represented. It can be seen that by corona treating the PP the strength of adhesion of PP/Arnitel even decreases, compared to the reference value. Variations in the corona and sealing conditions do not essentially change the strength of adhesion.

However, when a multilayered object of PP/Arnitel is corona treated, surprisingly a dramatic (a factor 10) increase in the strength of adhesion is obtained. To our knowledge this effect was never reported before. This increase in the strength of adhesion of PP/Arnitel multilayered objects by the method according to our invention is only slightly dependent on the thickness of the film (see Table 2). For the thinnest films tested here, the strength of adhesion exceeds the yield strength of the polymer material, thus giving cohesive failure instead of interfacial failure.

In Table 3, an excellent strength of adhesion, as compared to the strength of adhesion of the reference sheeting (13.3 J/m²) is demonstrated for different polymer objects. In the PE/PE multilayered object the value obtained with the process according to the invention, is even far superior to the value found in literature (77.8 J/m²), obtained by a corona pretreatment of the polymer films before joining the films together using a heat treatment (see : Owens, J. Applied Polymer Science, Vol 19, pp. 265-271 (1975)).

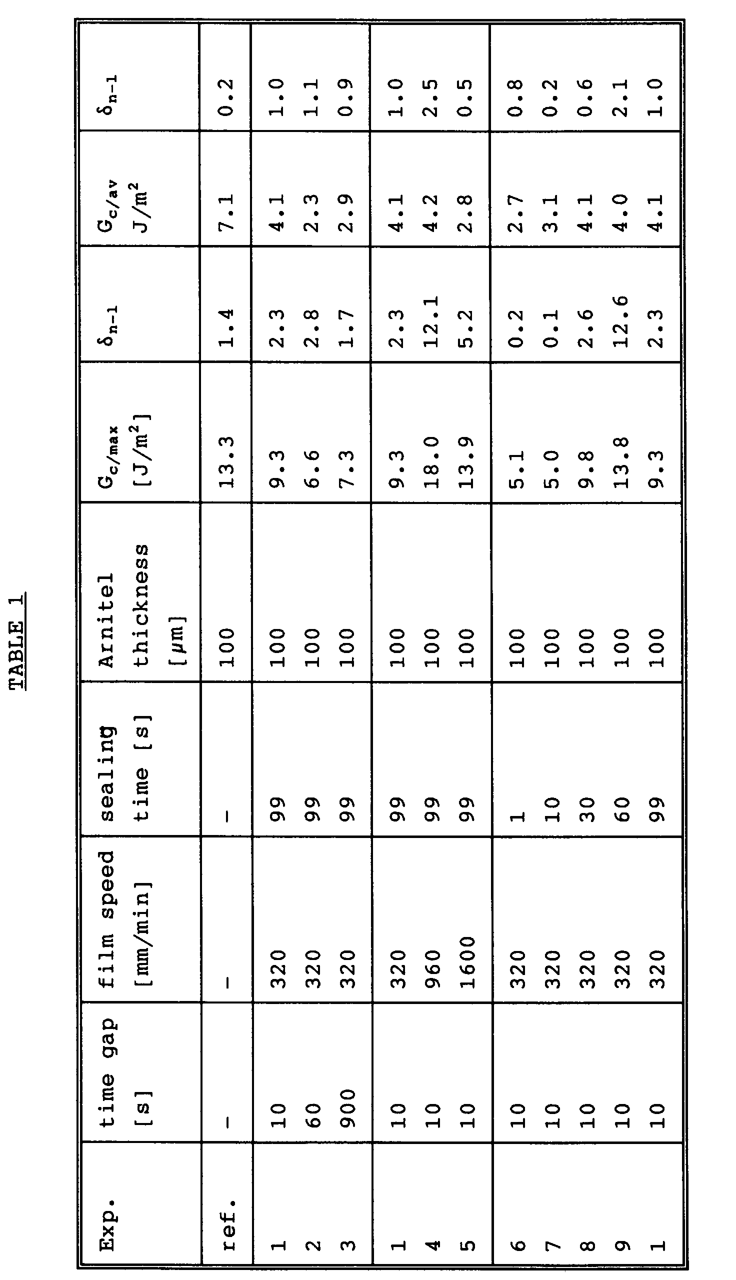

Different conditions of direct corona treatment of PP and subsequent sealing on Arnitel, combined with results from peel test.: G_{c/max} maximum peel energy during peel test, G_{c/av} average peel energy during peel test. δₙ₋₁ is the standard deviation of the peel energy.
Time gap is the time between the application of the corona treatment and the sealing step.

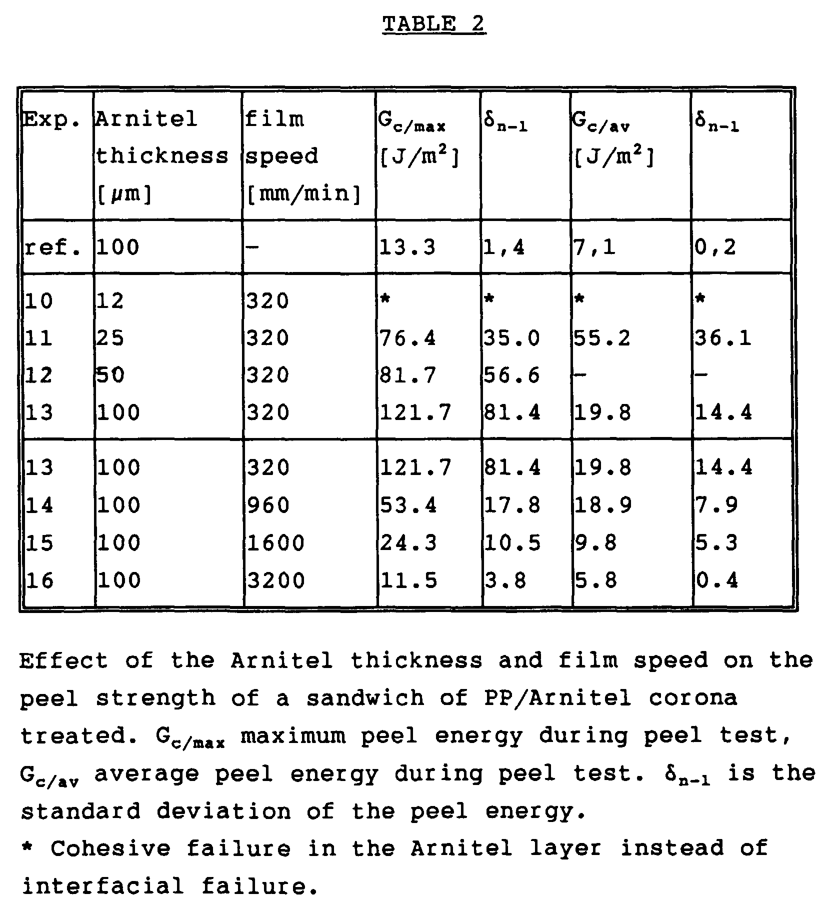

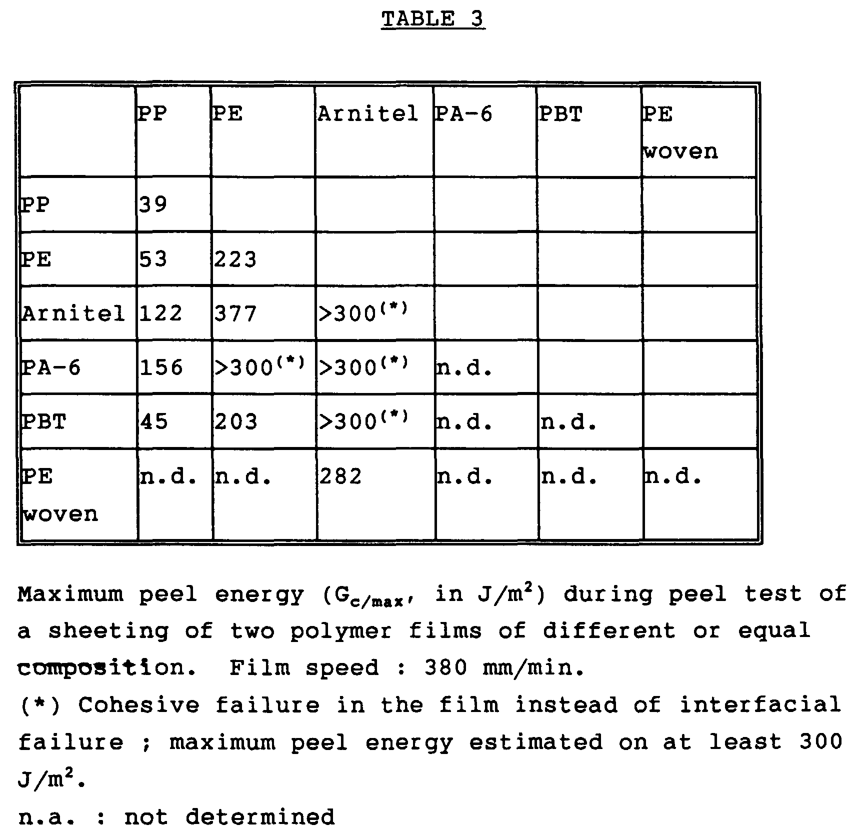

## Claims

1. Process for obtaining an improved adhesion between two polymer materials, each comprising at least one polymer, optionally the polymer material containing up to 80% by weight of one or more additives, in which process the surface of at least one polymer material is subjected to a plasma treatment using an electrical discharge, characterized in that a) the two materials are subjected to the plasma treatment, b) during the plasma treatment the two materials are in contact with each other and c) an electrical field is passed through the two materials.

2. Process according to claim 1 wherein one of the polymer materials is a film or a sheet.

3. Process according to claim 2 wherein during the plasma treatment the film is situated furthest away from the positive electrode.

4. Process according to any one of the claims 1 and 3 wherein the two materials are contacted under pressure during the plasma treatment.

5. Process according to claim 4 wherein the pressure is exerted by at least one cylinder roll.

6. Multilayered object comprising at least two layers of a different polymer material, the layers directly contacted with each other, characterized in that the adhesion of the two materials is characterized by a maximum peel energy, measured according to ISO 8510-2, of at least 20 J/m² and an average peel energy of at least 10 J/m².

7. Multilayered object according to claim 6 wherein the maximum peel energy is at least 30 J/m² and the average peel energy at least 15 J/m².

8. Multilayered object comprising at least two layers of the same polymer material, the layers directly contacted with each other, characterized in that the adhesion of the two materials is characterized by a maximum peel energy, measured according to ISO 8510-2, of at least 80 J/m².

9. Multilayered object according to any one of the claims 6-8 wherein the polymer is chosen from the group consisting of polyolefines, polyesters, polyetheresters, polyamides, polyetheramides, polyetherurethanes, acrylonitrile-butadiene-styrene copolymers, cellophanes, polystyrenes, polyvinylchlorides, vinylidene chloride polymers, ethylene vinyl acetate copolymers, polyurethanes, polytetrafluorethylene and blends thereof.
